# EUROPEAN PATENT APPLICATION

(11) **EP 4 814 701 A1**
(43) Date of publication of application: **30.09.2026**
(21) Application number: 26168259.5
(22) Date of filing: 26.03.2026
(51) Int. Cl.: G06F 8/65, G06F 11/14

(54) **REAL TIME VEHICLE UPDATE MECHANISM IN MULTIPLE STEPS IN WHICH AFTER EACH UPDATE THE PARAMETERS AND THE PERFOMANCE VARIANCE ARE ASSESSED**

(30) Priority: 28.03.2025 IN 202541029764
(71) Applicant: TVS Motor Company Limited, 600006 Chennai (IN)
(72) Inventor: Gudi, Venkata Ramana, 600006 Chennai (IN)
(74) Representative: Patentanwaltskanzlei Matschnig & Forsthuber OG

(57) **Abstract**

The present invention provides a method for controlling updates of a vehicle (100), the method includes, performing (501) a first set of vehicle update (201) by a control unit (101) installed in the vehicle (100), analyzing (502) by the control unit (101) the first set of vehicle update (201), detecting (503) one or more updated features (203) responsible for a performance variance (202) by the control unit (101), providing (504) a second set of vehicle update (205) by the control unit (101) for the one or more updated features (203) responsible for the performance variance (202), checking (505) a performance of the vehicle (206) by the control unit (101) after the second set of vehicle update (205) to ensure absence of the performance variance (202).

## Description

### TECHNICAL FIELD

The present invention generally relates to a vehicle. More particularly, the present invention relates to a real-time update mechanism in a vehicle.

### BACKGROUND

Electric vehicles (EVs) have become a cornerstone of modern transportation, offering sustainability, reduced emissions, and lower operating costs compared to internal combustion engine vehicles. With advancements in battery technology, software-controlled drivetrains, and autonomous driving features, EVs rely heavily on embedded software to ensure optimal performance, safety, and user experience. This heavy dependence on software makes Over-the-Air (OTA) updates an essential tool for improving vehicle functionality, introducing new features, and rectifying software issues without requiring physical servicing.

OTA updates provide manufacturers with the ability to enhance vehicle performance, fix security vulnerabilities, and improve user interfaces remotely. However, the complexity of EV software, which integrates various subsystems such as battery management, regenerative braking, driver assistance systems, and infotainment, poses significant challenges. An update that improves one feature might inadvertently affect another, leading to unforeseen performance deviations.

A major challenge in the existing OTA update mechanisms is the potential degradation of certain vehicle features post-update. For example, an update aimed at enhancing regenerative braking efficiency might negatively impact battery charging protocols or throttle response. Similarly, changes in software controlling autonomous features may alter sensor calibrations, leading to discrepancies in lane-keeping or adaptive cruise control behavior. Identifying the precise feature causing such unintended variations is difficult, as the current technology lacks a targeted approach to detecting and rectifying specific issues.

In traditional update frameworks, if a performance issue arises after an update, manufacturers typically have two options: revert the update entirely or release a comprehensive new update. Both approaches have significant drawbacks. Rolling back an update means losing beneficial enhancements, while deploying a full-scale update requires extensive testing, delays resolution, and may introduce new complexities.

Furthermore, conventional diagnostic tools used in vehicle maintenance focus on fault detection rather than identifying subtle performance variations caused by software updates. While error codes can indicate hardware malfunctions, they do not pinpoint software-induced performance deviations efficiently. This limitation forces manufacturers to rely on generalized troubleshooting rather than targeted refinements.

There is currently no existing technology that can automatically detect and isolate specific software features responsible for a post-update performance variance. Present methods involve manual debugging and extensive real-world testing, which are time-consuming and costly. The absence of an automated mechanism to identify problematic features delays response times, leading to customer dissatisfaction and potential safety concerns.

Another problem is that some updates introduce cumulative effects that only manifest under certain driving conditions. For example, an update to optimize battery efficiency might work well in city driving but cause unexpected power distribution issues during highway acceleration. Since these issues may not be immediately apparent, identifying them becomes even more challenging.

Current methodologies also fail to offer adaptive updates targeted at specific feature deviations. Instead, updates are generally released in batches, requiring a broad system update even when only a single function is affected. This leads to unnecessary data transmission, increased system load, and a higher probability of new performance inconsistencies.

In addition, reverting to a previous software version is not always a viable solution. Many updates contain security patches or compliance-related modifications that cannot be undone. Hence, rolling back an update to fix one problem could expose the vehicle to security risks or regulatory non-compliance.

One additional concern is the difficulty in predicting long-term impacts of updates on various vehicle components. While immediate functionality might appear stable, prolonged exposure to software changes could lead to gradual degradation in features like battery efficiency, thermal management, or drivetrain responsiveness. Without a system to continuously monitor these deviations, issues may only become evident after significant usage, leading to costly repairs and recalls.

Another issue is that existing solutions lack a feedback loop that automatically refines updates based on real-world vehicle performance. Currently, manufacturers rely on user-reported complaints and extensive simulations to address software flaws. This approach is slow, inefficient, and does not allow for timely correction of performance deviations, which can affect the driving experience and safety.

Additionally, existing OTA update systems lack granularity in their update mechanisms. Instead of refining only the affected subcomponent, most updates apply broad patches, increasing the risk of software conflicts. A more precise approach is required to ensure each feature is updated independently without disrupting other functionalities.

Another limitation is the lack of real-time adaptability in existing update frameworks. Once an update is installed, its effects are only assessed through indirect feedback mechanisms such as customer complaints or diagnostics performed at service centers. This delay in recognizing performance degradation prevents timely interventions and leads to extended periods of suboptimal vehicle operation.

A system that can accurately detect post-update deviations, analyze their root cause, and allow for targeted corrective actions would greatly improve the efficiency and reliability of EV software updates. Such advancements would reduce unnecessary rollbacks, enhance vehicle performance, and optimize the overall user experience, ensuring that updates improve the vehicle rather than compromise its functionality.

Thus, there is a need to address the aforementioned problems.

### SUMMARY OF THE INVENTION

The present invention provides a method for controlling updates in a vehicle. The method includes performing a first set of vehicle updates by a control unit installed in the vehicle, analyzing the first set of vehicle updates by the control unit, detecting one or more updated features responsible for a performance variance by the control unit, providing a second set of vehicle updates by the control unit for the one or more updated features responsible for the performance variance, checking a performance of the vehicle by the control unit after the second set of vehicle updates to ensure absence of the performance variance.

In one embodiment, performing the first set of vehicle updates by the control unit involves initiating updates to the vehicle to enhance functionality. These updates aim to improve various vehicle systems, such as battery management, autonomous driving capabilities, and software-controlled drivetrains.

In an embodiment, analyzing the first set of vehicle updates by the control unit involves assessing the impact on the vehicle's performance. The control unit continuously monitors key performance indicators to determine whether the updates have caused any deviations or inefficiencies.

In an embodiment, detecting the one or more updated features responsible for the performance variance by the control unit involves identifying specific changes that have led to performance deviations. The system uses comparative analysis to isolate the exact feature responsible for the observed variance.

In an embodiment, providing the second set of vehicle updates by the control unit for the one or more updated features responsible for the performance variance involves issuing corrective updates. These updates specifically address the detected issue to restore or enhance vehicle performance.

In an embodiment, checking the performance of the vehicle by the control unit after the second set of vehicle updates ensures that the performance variance is resolved, and if the performance variance is not eliminated, the control unit re-identifies the affected features and provides further updates as necessary.

In one embodiment, a system for controlling vehicle updates includes a control unit of the vehicle, a first update module of the control unit configured to perform a first set of vehicle updates, a performance analysis module of the control unit configured to analyze the first set of vehicle updates, a detection module of the control unit configured to detect one or more updated features responsible for a performance variance, a second update module of the control unit configured to perform a second set of vehicle updates, and a checking module of the control unit configured to check a performance of the vehicle after the second set of vehicle updates to ensure absence of the performance variance.

In one embodiment, the first update module is configured to perform the first set of vehicle updates to enhance the vehicle software and firmware. These updates may include security patches, performance optimizations, and feature improvements.

In an embodiment, the performance analysis module is configured to analyze the first set of vehicle updates by comparing the performance of the vehicle metrics before and after the updates. This ensures that changes are tracked and assessed accurately.

In an embodiment, the detection module is configured to detect the one or more updated features responsible for the performance variance by identifying changes causing performance variance. The detection module utilizes advanced analytics and real-time monitoring to ensure precise identification.

In an embodiment, the second update module is configured to perform the second set of vehicle updates to address the performance variance. These updates are precisely targeted to correct detected issues without affecting other vehicle functionalities.

In an embodiment, the checking module is configured to check the performance of the vehicle after the second set of vehicle updates to ensure the absence of the performance variance, and if the performance variance is not resolved, the control unit re-identifies the affected features and provides further updates until the issue is resolved.

It is to be understood that both the foregoing general description and the following detailed description are exemplary and explanatory only and are not restrictive of the present claimed subject matter.

### BRIEF DESCRIPTION OF THE DRAWINGS

The present invention will become more fully understood from the detailed description given herein below and the accompanying drawings which are given by way of illustration only and thus are not limitative of the present invention. Non-limiting and nonexhaustive embodiments of the present embodiments are described with reference to the following figures, wherein like reference numerals refer to like parts throughout the various views unless otherwise specified.
Figure 1 the flowchart outlines the method for managing vehicle software updates, starting with data collection, followed by evaluation to determine if an update is needed.
Figure 2 illustrates the block diagram where the control unit gathers real-time data from vehicle sensors, and the various module processes the data to check and provide necessary updates required for the features of the vehicle.

### DETAILED DESCRIPTION OF THE DRAWINGS

The present disclosure may be best understood with reference to the detailed figures and description set forth herein. Various embodiments are discussed below with reference to the figures. However, those skilled in the art will readily appreciate that the detailed descriptions given herein with respect to the figures are simply for explanatory purposes as the system may extend beyond the described embodiments. For example, the teachings presented, and the needs of a particular application may yield multiple alternative and suitable approaches to implement the functionality of any detail described herein. Therefore, any approach may extend beyond the implementation choices in the following embodiments described and shown.

References to "one embodiment," "at least one embodiment," "an embodiment," "one example," "an example," "for example," and so on indicate that the embodiment(s) or example(s) may include a particular feature, structure, characteristic, property, element, or limitation but that not every embodiment or example necessarily includes that particular feature, structure, characteristic, property, element, or limitation. Further, repeated use of the phrase "in an embodiment" does not necessarily refer to the same embodiment.

The present disclosure now will be described more fully hereinafter with different embodiments. This invention may, however, be embodied in many different forms and should not be construed as limited to the embodiments set forth herein; rather those embodiments are provided so that this disclosure will be thorough and complete, and fully convey the scope of the invention to those skilled in the art.

The present subject matter describes a method and system for managing real-time software updates in vehicles, focusing on optimizing update efficiency by ensuring that only relevant features are updated. The method addresses the limitations of conventional vehicle update mechanisms, which often apply blanket updates to all vehicle subsystems, leading to inefficiencies such as unnecessary data transmission, increased downtime, and potential performance issues. The invention presents a dynamic and intelligent update process that first applies an initial set of updates, then analyzes the impact of those updates, and subsequently provides targeted secondary updates for any features that cause performance variance. This ensures that updates are precise, avoiding the need for complete system rollbacks or unnecessary modifications to unaffected features.

The present subject matter addresses the inefficiencies of traditional update systems, where updates are either blindly applied across all subsystems or require significant manual intervention to assess their impact. In existing systems, any detected performance degradation after an update often necessitates either a complete rollback or extensive troubleshooting, both of which are time-consuming and resource-intensive. This invention eliminates such inefficiencies by integrating an intelligent analyzing unit within the vehicle that continuously assesses the vehicle's performance post-update, identifies specific features responsible for deviations, and applies corrective updates only to those features. This selective approach ensures minimal disruptions to vehicle operation and conserves computational and communication resources.

One objective of the present invention is to enhance the efficiency of vehicle software updates by introducing a structured two-step update mechanism. The first update phase applies initial software enhancements aimed at improving various vehicle functionalities, such as software-controlled drivetrains, battery management, and safety features. After this initial update, the system performs a real-time assessment to determine whether any feature has introduced an unexpected performance variance. Instead of applying broad rollbacks or requiring external intervention, the vehicle's control unit autonomously detects and isolates the specific feature causing the variance and applies a second, targeted update to resolve the issue.

To this end, the analyzing unit embedded within the vehicle enables real-time performance monitoring, reducing dependency on external servers and eliminating delays associated with remote diagnostics. Unlike traditional methods that require vehicles to transmit performance data to external servers for analysis before corrective updates are determined, this invention ensures immediate detection and resolution of issues locally, leading to significantly faster and more efficient update processes.

Another objective is to address the challenge of excessive data transmission and power consumption associated with traditional update mechanisms. In conventional systems, all updates, regardless of necessity, are applied across multiple subsystems, leading to an inefficient use of bandwidth and computational resources. Additionally, large data transfers to and from remote servers can result in network congestion and increased latency, especially in areas with weak connectivity. By enabling real-time local analysis and selective feature updates, the present invention reduces unnecessary data transfer, minimizes processing loads, and optimizes power management during the update process.

To this end, the on-board control unit ensures that only necessary updates are applied, significantly reducing energy consumption. Since the system avoids unnecessary modifications to properly functioning features, the overall power demand of the update process is minimized, preventing unnecessary drain on the vehicle's battery. This is particularly beneficial for electric vehicles, where energy conservation is a critical consideration.

A further objective of the present invention is to minimize vehicle downtime and improve update reliability. Traditional update mechanisms often require manual intervention, either by the vehicle owner or a technician, to diagnose and resolve performance discrepancies following an update. This can lead to extended periods where the vehicle remains inactive, causing inconvenience to users. By implementing an autonomous update verification process, the present invention allows the vehicle to independently assess update success, detect and correct performance issues, and complete the update cycle without requiring human intervention.

To this end, the integration of an intelligent control unit capable of independently assessing vehicle performance post-update ensures a seamless and uninterrupted driving experience. The system's ability to proactively resolve performance discrepancies without the need for manual troubleshooting significantly enhances vehicle usability and customer satisfaction.

Additionally, the present invention enhances the adaptability of the update process by ensuring that update corrections are applied dynamically based on real-time operational conditions. Traditional systems often follow rigid update schedules or predefined criteria that may not align with the vehicle's current state. This can lead to situations where updates either introduce unnecessary changes or fail to address emerging performance issues. By continuously monitoring the vehicle's response to updates and making adjustments as needed, this invention ensures that update strategies are always aligned with the vehicle's real-time operational needs.

To this end, the adaptive update mechanism ensures that vehicles receive only the most relevant updates, improving overall performance while maintaining system stability. The ability to refine and adjust updates dynamically prevents software conflicts and ensures that each update cycle results in a net improvement to vehicle performance.

The present invention also contributes to long-term vehicle health and durability by proactively identifying and addressing potential performance deviations before they escalate into significant issues. Continuous monitoring of key vehicle subsystems, including drivetrain components, battery management systems, and software-controlled safety features, enables early detection of anomalies and targeted resolution. This reduces wear and tear on vehicle components and extends their lifespan, ultimately improving vehicle reliability.

To this end, the system's ability to identify and rectify performance deviations before they impact vehicle operation ensures that vehicles maintain optimal performance levels over time. This predictive approach to update management enhances vehicle longevity and reduces the likelihood of unexpected breakdowns or costly repairs.

In addition to technical advantages, the present invention also improves user experience by streamlining the update process and eliminating the need for complex troubleshooting. Traditional update methods often require vehicle owners to manually approve updates, monitor update success, and seek assistance if issues arise post-update. This can be a cumbersome and time-consuming process. By automating the entire update and verification cycle, this invention simplifies vehicle maintenance and ensures that users receive updates seamlessly without disruptions.

To this end, the automated nature of the update process enhances user convenience, allowing vehicle owners to benefit from software improvements without requiring technical expertise or manual intervention. The ability of the system to autonomously verify update success and apply necessary corrections ensures a hassle-free experience for users.

Furthermore, by reducing the complexity and resource demands associated with vehicle updates, the present invention paves the way for a more sustainable and scalable approach to software maintenance in modern vehicles. The efficient use of computational power, bandwidth, and energy aligns with the broader goals of sustainability in the automotive industry, making vehicle updates more eco-friendly while maintaining optimal performance.

To this end, the system's ability to intelligently manage updates with minimal resource consumption contributes to a more sustainable and efficient vehicle ecosystem. The reduced need for extensive data transmission and power-intensive processing not only benefits vehicle operation but also aligns with global efforts to optimize energy usage in the transportation sector.

Overall, the present invention introduces a groundbreaking approach to vehicle software updates by ensuring that only necessary updates are applied, reducing update-related inefficiencies, and enhancing vehicle performance through real-time analysis and targeted corrective updates. The combination of technical advantages, user convenience, and sustainability makes this invention a significant advancement in modern vehicle software management.

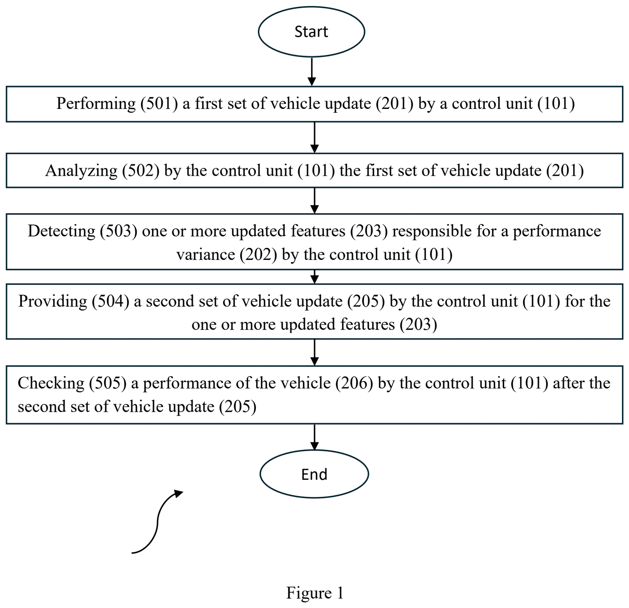

Figure 1 illustrates a method for managing vehicle updates by dynamically identifying and addressing performance variance (202) after an initial update cycle. The process begins with the control unit (101) retrieving real-time operational data from various vehicle subsystems, forming the first set of vehicle parameters (200). These parameters represent the vehicle's status before applying any updates. Based on these first set of vehicle parameters (200), the control unit (101) applies the first set of vehicle updates (204). After these updates are implemented, the control unit (101) analyzes the vehicle's condition to determine whether any performance variance (202) is present. If the control unit (101) identifies a performance variance (202), it further analyzes the updated vehicle state to determine the one or more updated features (203) responsible for the detected performance variance (202). The control unit (101) then provides the second set of vehicle updates (205) specifically for the one or more updated features (203) identified in the previous step. Following the second set of vehicle updates (205), the control unit (101) checks whether the performance variance (202) is still present. If no performance variance (202) is detected, the update process is considered complete. If the performance variance (202) persists, the control unit (101) may take further corrective measures to ensure optimal vehicle functionality. This method optimizes the update process by ensuring that only necessary updates are applied, thereby preventing unnecessary modifications to features that are functioning correctly.

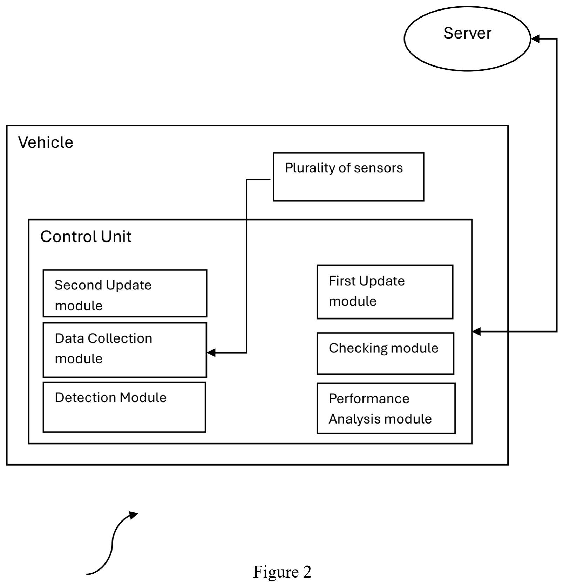

Figure 2 illustrates a system for managing vehicle updates by incorporating a control unit (101) within the vehicle (100) that communicates with various internal components and an external server (110). The control unit (101) is responsible for overseeing the update process, ensuring that only necessary updates are applied based on real-time vehicle conditions. The control unit (101) comprises multiple modules, each performing distinct functions to facilitate efficient update management. A data collection module (111) is configured to receive real-time data from a plurality of sensors (120) distributed throughout the vehicle (100). These sensors (120) continuously monitor various vehicle parameters, such as speed, battery status, engine performance, and other operational metrics, transmitting the gathered data to the data collection module (111) for processing. The data collection module (111) forwards the gathered information to an analyzing module (112) within the control unit (101). The analyzing module (112) processes the first set of vehicle parameters (200) received from the data collection module (111) and assesses the vehicle's current state before any updates are applied. Based on this analysis, the analyzing module (112) determines whether an update is required. If an update is necessary, an update module (113) within the control unit (101) retrieves the first set of vehicle updates (204) and applies them to the respective vehicle components. Following the update, the analyzing module (112) assesses whether any performance variance (202) has resulted from the update by evaluating the vehicle's post-update condition. In cases where performance variance (202) is detected, the analyzing module (112) further identifies the one or more updated features (203) responsible for the variance. The update module (113) then retrieves and applies a second set of vehicle updates (205) specifically targeting the identified one or more updated features (203) to rectify the issue. Throughout this process, the control unit (101) maintains communication with a server (110), which may store and provide necessary update packages. The server (110) is connected to the control unit (101) and facilitates secure transmission of updates as required. However, the control unit (101) primarily functions autonomously by processing real-time data and determining update requirements locally, thereby minimizing reliance on external resources. This structured and modular design of the control unit (101) ensures efficient update management while maintaining optimal vehicle performance. The integration of the data collection module (111), analyzing module (112), and update module (113) enables precise and targeted updates, reducing unnecessary modifications and enhancing overall system reliability.

At step 503, the control unit detects one or more updated features responsible for a performance variance. The control unit examines the operational parameters post-update and compares them with expected thresholds. If a deviation in performance is observed, the control unit identifies the specific updated features contributing to the variance. This allows for targeted corrective actions, ensuring that only necessary adjustments are made without affecting other stable vehicle functionalities. By identifying the specific updated features that cause performance variance, this step ensures that troubleshooting is precise and efficient. Instead of rolling back an entire update or making broad changes, the system can focus only on problematic areas, thereby saving computational resources, minimizing downtime, and improving vehicle stability.

At step 504, the control unit provides a second set of vehicle updates for the one or more updated features responsible for the performance variance. After detecting the features that caused a deviation, the control unit applies corrections to those specific features. These updates may involve recalibrations, software patches, or configuration changes that mitigate the performance variance while preserving the benefits of the original update. This step enables a self-correcting update mechanism that ensures optimal functionality without requiring external interventions. By refining the update process based on real-time performance evaluations, the system enhances vehicle adaptability and operational consistency, reducing the risk of persistent software-related issues.

At step 505, the control unit checks the performance of the vehicle after the second set of vehicle updates to ensure the absence of performance variance. The system reevaluates key parameters and compares them with expected operational conditions to confirm that the corrective update has resolved the issue. If no further deviations are detected, the update process is deemed successful, and the vehicle continues operating with the optimized settings. This final step ensures that the update process is not only applied but also validated for effectiveness. By incorporating a built-in verification mechanism, the system eliminates the risk of introducing long-term performance inconsistencies. This enhances reliability, reduces the need for manual diagnostics, and improves overall user trust in the vehicle's self-updating capabilities.

Ultimately, the present subject matter provides a dynamic and data-driven approach to vehicle software updates, which significantly enhances vehicle performance, energy efficiency, and system longevity. As electric vehicles continue to evolve with more complex subsystems, the need for an adaptive update system that optimizes resources and ensures peak efficiency becomes increasingly crucial, making this innovation a substantial leap in vehicle management technology.

Finally, the language used in the specification has been principally selected for readability and instructional purposes, and it may not have been selected to delineate or circumscribe the inventive subject matter and is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. A person with ordinary skills in the art will appreciate that the systems, modules, and sub-modules have been illustrated and explained to serve as examples and should not be considered limiting in any manner. It will be further appreciated that the variants of the above disclosed system elements, modules, and other features and functions, or alternatives thereof, may be combined to create other different systems or applications. Those skilled in the art will appreciate that any of the system modules may be suitably replaced, reordered, or removed, and additional steps and/or system modules may be inserted, depending on the needs of a particular application.

While the present disclosure has been described with reference to certain embodiments, it will be understood by those skilled in the art that various changes may be made, and equivalents may be substituted without departing from the scope of the present disclosure. In addition, many modifications may be made to adapt a particular situation or material to the teachings of the present disclosure without departing from its scope. Therefore, it is intended that the present disclosure is not limited to the embodiment disclosed, but that the present disclosure will include all embodiments falling within the scope of the appended claims.

### List of Reference numerals

100: Vehicle
101: Control Unit
102: First Update Module
103: Performance Analysis Module
104: Detection Module
105: Second Update Module
106: Checking Module
201: First Set of Vehicle Update
202: Performance Variance
203: Updated Features
204: Further Update
205: Second Set of Vehicle Update
206: Performance of the Vehicle
207: Further Update
301: Performing
302: Analyzing
303: Detecting
304: Providing
305: Checking

## Claims

1. A method for controlling updates of a vehicle (100), the method comprising:
performing (501) a first set of vehicle update (201) by a control unit (101) installed in the vehicle (100);
analyzing (502) by the control unit (101) the first set of vehicle update (201);
detecting (503) one or more updated features (203) responsible for a performance variance (202) by the control unit (101);
providing (504) a second set of vehicle update (205) by the control unit (101) for the one or more updated features (203) responsible for the performance variance (202);
checking (505) a performance of the vehicle (206) by the control unit (101) after the second set of vehicle update (205) to ensure absence of the performance variance (202).

2. The method as claimed in claim 1, wherein performing (501) the first set of vehicle updates (201) by the control unit (101) involves initiating updates to the vehicle (100) to enhance functionality.

3. The method as claimed in claim 1, wherein analyzing (502) the first set of vehicle updates (201) by the control unit (101) involves assessing the impact of the performance of the vehicle (206).

4. The method as claimed in claim 1, wherein detecting (503) the one or more updated features (203) responsible for the performance variance (202) by the control unit (101) involves identifying specific changes that have caused deviations in the performance of the vehicle (206).

5. The method as claimed in claim 1, wherein providing (504) the second set of vehicle updates (205) by the control unit (101) for the one or more updated features (203) responsible for the performance variance (202) involves providing (504) a further update (207) to correct performance issues.

6. The method as claimed in claim 1, wherein checking (505) the performance of the vehicle (206) by the control unit (101) after the second set of vehicle updates (205) to ensure the absence of the performance variance (202) and if the performance variance (202) being not resolved, the control unit (101) re-identify and provide the further update (207) for the one or more updated features (203) responsible for the performance variance (202).

7. A system for controlling updates of a vehicle (100), comprising:
a control unit (101) of the vehicle (100);
a first update module (301) of the control unit (101) configured to perform a first set of vehicle update (302);
a performance analysis module (303) of the control unit (101) configured to analyze the first set of vehicle update (201);
a detection module (304) of the control unit (101) configured to detect one or
more updated feature (305) responsible for a performance variance (202);
a second update module (306) of the control unit (101) configured to perform a second set of vehicle update (205); and
a checking module (307) of the control unit (101) configured to check a performance of the vehicle (206) after the second set of vehicle update (306) to ensure absence of the performance variance (202).

8. The system as claimed in claim 7, wherein the first update module (301) being configured to perform the first set of vehicle updates (302) to enhance the vehicle (100) software and firmware.

9. The system as claimed in claim 7, wherein the performance analysis module (303) being configured to analyze the first set of vehicle updates (302) by comparing the performance of the vehicle (206) metrics before and after the updates.

10. The system as claimed in claim 7, wherein the detection module (304) being configured to detect the one or more updated features (305) responsible for the performance variance (202) by identifying changes causing performance variance (202).

11. The system as claimed in claim 7, wherein the second update module (306) being configured to perform the second set of vehicle updates (205) to address the performance variance (202).

12. The system as claimed in claim 7, wherein the checking module (307) being configured to check the performance of the vehicle (206) after the second set of vehicle updates (205) to ensure the absence of the performance variance (202), and if the performance variance (202) being not resolved, the control unit (101) re-identify and provide the further update (207) for the one or more updated features (203) responsible for the performance variance (202).
